# EUROPEAN PATENT SPECIFICATION

(11) **EP 1 927 558 B1**
(45) Date of publication and mention of the grant of the patent: **15.06.2011**
(21) Application number: 07023029.7
(22) Date of filing: 28.11.2007
(51) Int. Cl.: B65G 39/09, B65G 39/04

(54) **Apparatus for conveying**
Fördervorrichtung
Appareil de transport

(30) Priority: 01.12.2006 KR 20060120349
(43) Date of publication of application: 04.06.2008
(73) Proprietor: APRO System Co., Ltd., Korea 445-811 (KR)
(72) Inventor: Han, Jum-Lyul, Yeongtong 1-dong Yeongtong-gu Suwon-si Gyeonggi-do (KR)
(74) Representative: Weiss, Peter

(56) References cited:
- GB-A- 230 645
- US-A- 1 332 815

## Description

### BACKGROUND OF THE INVENTION

### Field of the Invention

The present invention relates to an apparatus for conveying an article on a plurality of rotatable parallel shafts, and more particularly, to an apparatus for conveying an article on a plurality of rotatable parallel shafts with a decreased possibility of deflection of the shafts.

### Description of the Related Art

Articles can be conveyed on a plurality of parallel shafts arranged in series. Conveyors with a series of parallel shafts are widely used in various fields such as manufacturing and logistics fields. The GB 230,645 discloses such a conveyor, where rollers are made up from an inner fixed shaft, an outer cylindrical tube and ball bearings for supporting said outer cylindrical tube. Also the US 1,332,815 discloses a conveyor having a suitable shaft, which may be formed with any number of annular portions. Each end of the shaft is supported by bearings and intermediate the bearings are supporting bearings, the upper end of each of which is forked and notched for receiving the shaft. A plurality of pulleys is mounted for rotation on each of the angular portions of the shaft.

In such a conveyor, shafts can be deflected by their own weight or an article placed thereon. Particularly, a long shaft can be easily deflected. In this case, articles cannot be smoothly conveyed, and the lifespan of the conveyor can be shortened. Particularly, when the conveyor carries an article that can be easily damaged by deflection such as a flat display panel and a wide glass plate, deflection of the shafts may results in serious problems.

In addition, ball bearings supporting the shafts can be easily contaminated and damaged by abrasion when the shafts are deflected.

To address these problems, several methods have been proposed, such as a method of increasing the diameter of shafts and a method of filling a predetermined material into shafts. However, such methods increase the size and manufacturing costs of a conveyor and complicate the structure of the conveyor.

### SUMMARY OF THE INVENTION

Accordingly, the present invention is directed to a conveying apparatus that substantially obviates one or more problems due to limitations and disadvantages of the related art.

Embodiments of the present invention provide a conveying apparatus having a structure for preventing deflection of shaft.

Embodiments of the present invention also provide a conveying apparatus including shafts that can be adjusted in tension according to the allowable deflection of an article to be conveyed.

Additional advantages and features of the invention will be set forth in part in the description which follows and in part will become apparent to those having ordinary skill in the art upon examination of the following or may be learned from practice of the invention.

In one aspect of the present invention, there is provided an apparatus for conveying, the apparatus includes a plurality of parallel main shafts. A plurality of auxiliary shafts is inserted through the main shafts, respectively, so as to prevent deflection or bending of the main shafts.

The auxiliary shafts are inserted through the main shafts and have both ends fixed to a frame, and a plurality of bearing members is disposed between the main shafts and the auxiliary shafts for supporting the main shafts and allowing rotation of the main shafts. Furthermore, a tension unit is disposed at both ends or one end of the auxiliary shaft for adjusting tension of the auxiliary shaft.

Each of the bearing members may include a ball bearing coupled to the auxiliary shaft by insertion. Each of the bearing members may further include a bearing fixing member for preventing movement of the ball bearing.

In some embodiments, the apparatus may further include a frame support member. The frame support member may be disposed in parallel to the main shafts to support the frame so as to prevent bending of the frame when the auxiliary shaft is pulled by the tension unit.

In other embodiments, the apparatus may further include a reinforcement shaft having a diameter greater than that of the auxiliary shaft and axially connected to the auxiliary shaft. In this case, the tension unit may be disposed at an end of the reinforcement shaft.

The tension unit may include a bolt unit formed at an end of the auxiliary shaft, and a nut unit coupled to the bolt unit for pulling the auxiliary shaft. In this case, the tension of the auxiliary shaft can be adjusted using the nut unit.

The apparatus may further include a roller rotatably coupled to the main shaft by insertion.

The apparatus may further include a motor, a rotation shaft, and a power transmission unit for rotating the main shafts.

The rotation shaft is disposed perpendicular to the main shafts and rotatable by receiving rotation power from the motor. The power transmission unit transmits rotation power from the rotation shaft to the main shafts.

For example, non-contact gears formed by first and second magnets can be used as the power transmission unit. The first magnets are disposed at ends of the main shafts, respectively. The second magnet is mounded on the rotation shaft by insertion to apply a repulsive force to the first magnets when rotating with the rotation shaft so as to transmit rotation power from the rotation shaft to the first magnets.

In another aspect of the present invention, there is provided an apparatus for conveying. Instead of the above-mentioned bearing member, the apparatus can include a main magnet unit formed on an inner surface of the main shaft, and an auxiliary magnet unit formed on an outer surface of the auxiliary shaft for supporting the main shaft by applying a repulsive force to the main magnet unit.

In a further another aspect of the present invention, there is provided an apparatus for conveying. Instead of the above-mentioned bearing member, an auxiliary shaft of the apparatus can be shaped like a closed cylinder having a cavity portion. Air (usually, compressed air) can be injected into the cavity portion. Then, the air can be discharged from the cavity portion through a plurality of discharge holes for supporting the main shaft using the discharged air.

It is to be understood that both the foregoing general description and the following detailed description of the present invention are exemplary and explanatory and are intended to provide further explanation of the invention as claimed.

### BRIEF DESCRIPTION OF THE DRAWINGS

Fig. 1 is a schematic view illustrating an apparatus for conveying an article according to an embodiment of the present invention.

Figs. 2 to 4 are schematic views illustrating shaft structures according to embodiments of the present invention.

Fig. 5 is a perspective view illustrating an apparatus for conveying an article according to another embodiment of the present invention.

Fig. 6 is a cross-sectional view of the apparatus illustrated in Fig. 5.
There are no Fig. 7-8.

Fig. 9 is an enlarged view of portion B of Fig. 6.

Fig. 10 is a perspective view of portion B of Fig. 6.

Fig. 11 is an enlarged view of portion C of Fig. 6.

Fig. 12 is view illustrating an auxiliary shaft and a tension unit according to another embodiment of the present invention.

Figs. 13A to 13C are cross-sectional views illustrating bearing members for supporting a main shaft according to another embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

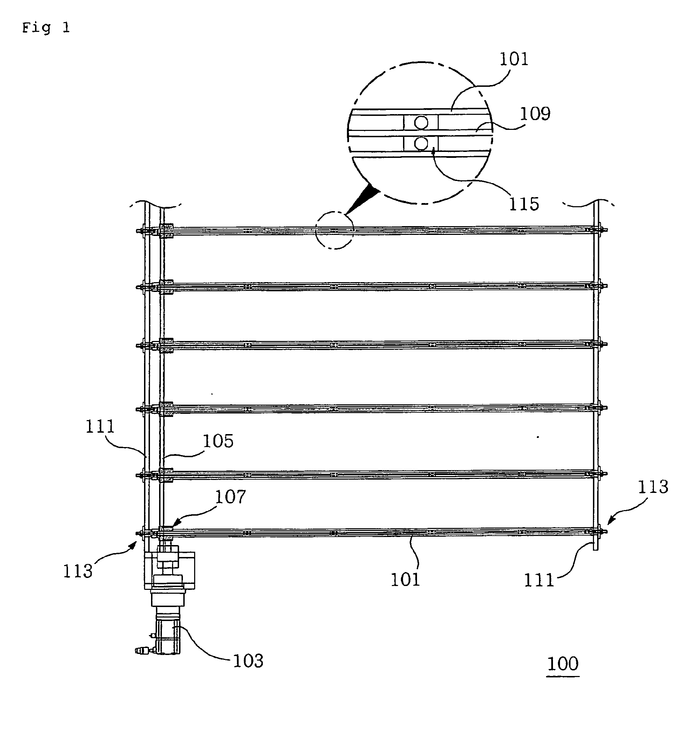

Fig. 1 is a schematic view illustrating an apparatus 100 for conveying an article according to an embodiment of the present invention.

Referring to Fig. 1, the conveying apparatus 100 includes a plurality of parallel main shafts 101, a motor 103, a rotation shaft 105 receiving power from the motor 103 for rotation, and a power transmission unit 107 for transmitting rotation power from the rotation shaft 105 to the main shafts 101. The main shafts 101 are rotated by rotation power received from the motor 103 through the rotation shaft 105 and the power transmission unit 107 so that an article placed on the main shafts 101 can be conveyed.

In the current embodiment, the motor 103 is used as an actuator for rotating the main shafts 101. However, for example, the main shafts 101 can be rotated by a force directly applied to an article placed on the main shafts 101. In other words, the motor 103, the rotation shaft 105, and the power transmission unit 107 may not be included in the conveying apparatus 100.

The main shafts 101 have a pipe shape. The material and thickness of the main shafts 101 can be varied according to articles to be conveyed. For example, when a glass plate for a flat display device is conveyed on the main shafts 101, the main shafts 101 can be formed of a light material such as aluminum (Al) and have a diameter of about 10 mm and a thickness of about 2 mm. Alternatively, the main shafts 101 can be formed of other materials such as stainless steel and a polymer.

The main shafts 101 are supported by auxiliary shafts 109 and bearing members 115. Thus, an external structure is not necessary for supporting the main shafts 101. The auxiliary shafts 109 disposed through the main shafts 101 for preventing the main shafts 101 from deflecting and bending.

The auxiliary shafts 109 pass through the main shafts 101 and are fixed to a frame 111. Tension units 113 are attached to right ends and/or left ends of the auxiliary shafts 109 to apply a tension force to the auxiliary shafts 109 so that the auxiliary shafts 109 can stably support the main shafts 101. The auxiliary shafts 109 may be formed of a material suitable for bearing a tension force from the tension units 113. For example, the auxiliary shafts 109 can be formed of stainless steel or carbon steel.

The tension of the auxiliary shafts 109 can be maintained at a desired level owing to the tension units 113. Therefore, for example, the auxiliary shafts 109 can easily absorb a vertical impact force. In addition, even when the auxiliary shafts 109 are deformed by an impact force, the auxiliary shafts 109 can easily return to their original shapes. The auxiliary shafts 109 have an outer diameter smaller than the inner diameter of the main shafts 101 so as not to hinder the rotation of the main shafts 101.

The allowable deflection or bending of the main shafts 101 or the auxiliary shafts 109 can be varied according to articles to be conveyed. For example, when a glass plate is conveyed on the conveying apparatus 100, the allowable deflection of the main shafts 101 may be low (e.g., 0.5 mm or lower) since the glass plate can be easily damaged or broken by deflection. However, for example, when a robust article is conveyed on the conveying apparatus 100, the allowable deflection of the main shafts 101 can be increased. Therefore, in the current embodiment, the tension unit 113 can finely adjust the tension of the auxiliary shaft 109, thereby finely controlling the deflection of the main shaft 101.

The main shafts 101 are also supported by the bearing members 115 disposed on the auxiliary shafts 109. Therefore, additional bearing members for enclosing and supporting both ends of the main shafts 101 may not be necessary.

The bearing members 115 are disposed between the main shafts 101 and the auxiliary shafts 109 for supporting the main shafts 101 and allowing rotation of the main shafts 101. The bearing members 115 can be fixed to the auxiliary shafts 109 for supporting the main shafts 101. The main shafts 101 supported by the bearing members 115 can be rotated by rotation power transmitted through the power transmission unit 107.

In a conventional conveyor, shafts are supported at two points (e.g., both ends of the shafts). However, in the current embodiment of the present invention, the main shafts 101 are supported at multi points using the auxiliary shafts 109 and the bearing members 115. Owing to this structure, a vertical force applied to the main shafts 101 can be easily distributed and absorbed. Therefore, the main shafts 101 can be formed of a much lighter material, and the bearing members 115 can have a small size. As a result, the structure of the conveying apparatus 100 can be simple.

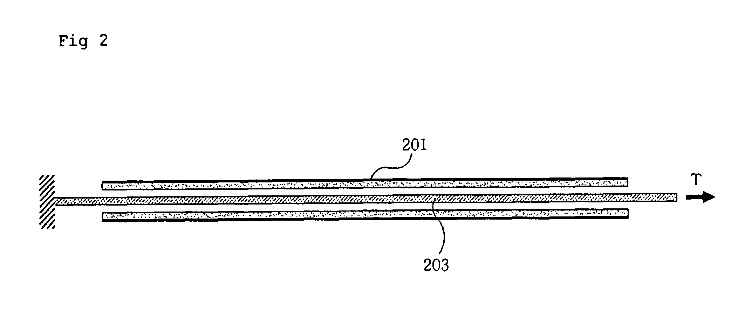

Figs. 2 to 4 are schematic views illustrating shaft structures according to embodiments of the present invention. In the shaft structures illustrated in Figs. 2 to 4, other members are used as replacements to the bearing members 115 of Fig. 1. Therefore, according to another embodiment of the present invention, conveying apparatuses can be provided using the shaft structures of Figs. 2 to 4. The conveying apparatuses can include the same elements as the conveying apparatus 100 of Fig. 1 except for the shaft structure illustrated in Fig. 1.

Referring to Fig. 2, a main magnet unit is disposed on an inner surface of a main shaft 201, and an auxiliary magnet unit is disposed on an outer surface of an auxiliary shaft 203. The main magnet unit and the auxiliary magnet unit are disposed with opposite poles facing each other. As the auxiliary shaft 109 of Fig. 1, the auxiliary shaft 203 is pulled by a tension unit so that the auxiliary shaft 203 can have predetermined tension. The main shaft 201 is supported by a repulsive force between the main and auxiliary magnet units and can be rotated while allowing a predetermined gap between the main and auxiliary magnets. That is, the repulsive force between the main shaft 201 and the auxiliary shaft 203 have the same function as that of the bearing member 115 of Fig. 1. Alternatively, instead of using the main and auxiliary magnet units, the main shaft 201 and the auxiliary shaft 203 can be formed of a magnetic material.

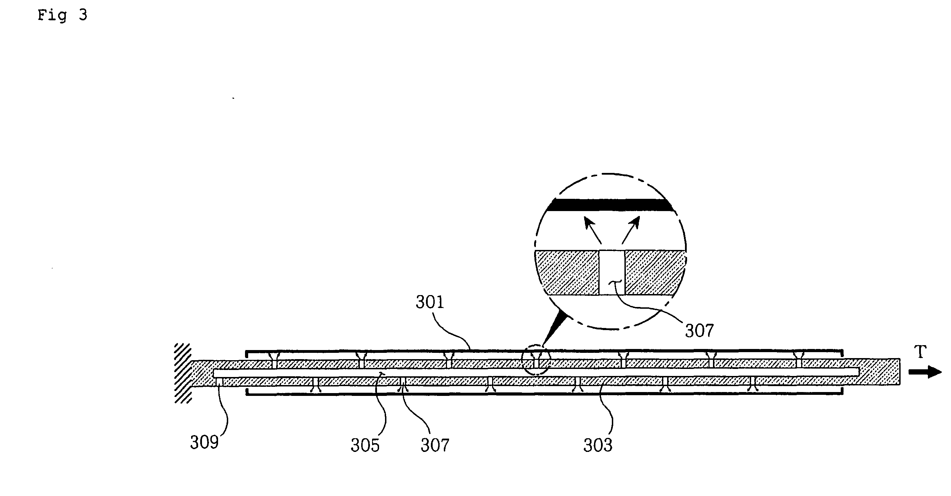

Referring to Fig. 3, an auxiliary shaft 303 is pipe-shaped. The auxiliary shaft 303 includes a cavity portion 305 to which air can be introduced, and a plurality of discharge holes 307 that are uniformed arranged. An air injection inlet 309 is formed in an end of the auxiliary shaft 303 to supply compressed air to the cavity portion 305. Compressed air injected into the cavity portion 305 through the air injection inlet 309 is uniformly discharged from the cavity portion 305 through the discharge holes 307 for supporting a main shaft 301.

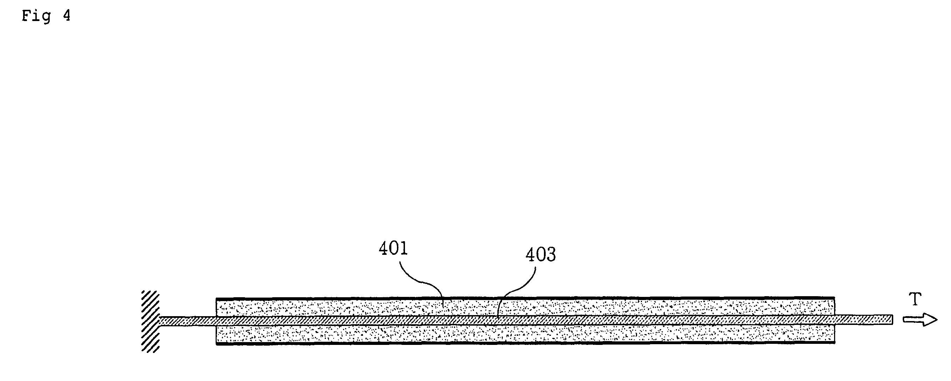

Referring to Fig. 4, a main shaft 401 has a porous sliding bearing structure so that the main shaft 401 can rotate on an auxiliary shaft 403. Since lubricant oil is contained in pores of the main shaft 401, it is not necessary to supply lubricant oil to a gap between the main shaft 401 and the auxiliary shaft 403. The auxiliary shaft 403 supports the entire inner surface of the main shaft 401.

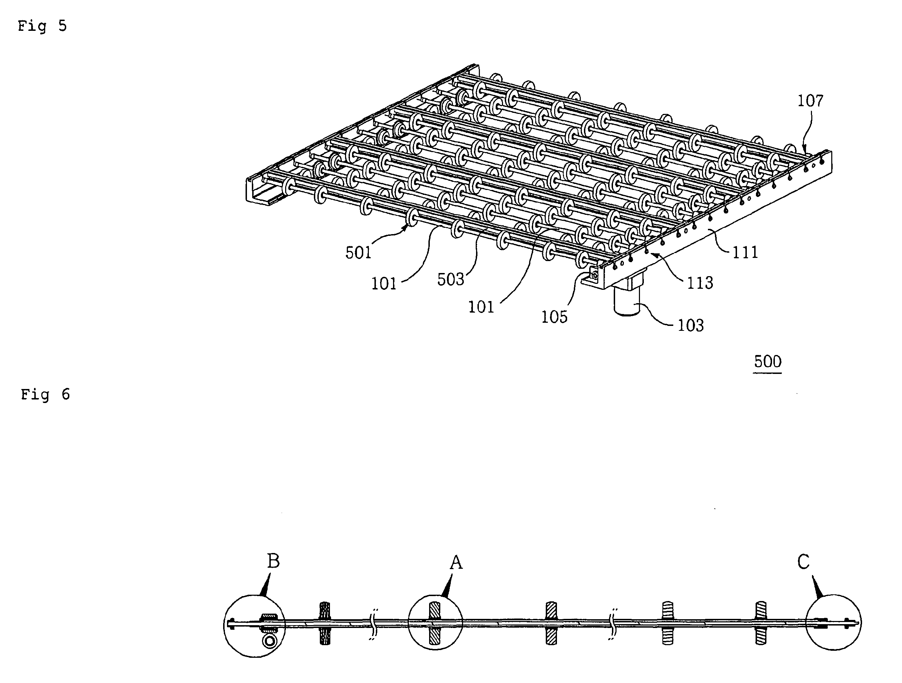

Fig. 5 is a perspective view illustrating an apparatus 500 for conveying an article according to another embodiment of the present invention. The conveying apparatus 500 have the same shaft structure as the conveying apparatus 100 of Fig. 1.

Referring to Fig. 5, a plurality of main shafts 101 is arranged in parallel, and auxiliary shafts 109 are fixed to a frame 111 using tension units 113 for supporting the main shafts 101. A motor 103 is disposed at a lower side of the frame 111.

A plurality of roller units 501 is disposed at each of the main shafts 101 for supporting an article to be conveyed. The roller units 501 have predetermined elasticity so that an impact force applied to the roller units 501 by an article or due to other reasons can be absorbed.

In addition, when the auxiliary shafts 109 fixed to the frame 111 are pulled using the tension units 113, the frame 111 can be bent in an axial direction of the main shafts 101. For this reason, a frame support member 503 can be disposed between bars of the frame 111. Furthermore, the frame 111 can have an extension in the axial direction of the main shafts 101 (for example, the frame 111 can be L- or c-shaped).

Fig. 6 is a cross-sectional view illustrating the shaft structure of the conveying apparatus 500 of Fig. 5.

The auxiliary shaft 109 is disposed inside the pipe-shaped main shaft 101 for supporting the main shaft 101.

The conveying apparatus 500 includes a bearing member 115 disposed between the auxiliary shaft 109 and the main shaft 101 for supporting the main shaft 101, and spring clips. In the current embodiment, a bearing with rolling contact, such as a ball bearing, is used as the bearing member 115. The spring clips are used to fix the ball bearing. The ball bearing is mounted on the auxiliary shaft 109, and the spring clips are disposed at both sides of the ball bearing to firmly fix the ball bearing.

The roller unit 501 is coupled to the main shaft 101 by insertion. The roller unit 501 includes a roller and bushings for fixing the roller to the main shaft 101. The roller has proper elasticity. Therefore, when an article is conveyed on the conveying apparatus 500, an impact force applied to the roller by the article can be effectively absorbed.

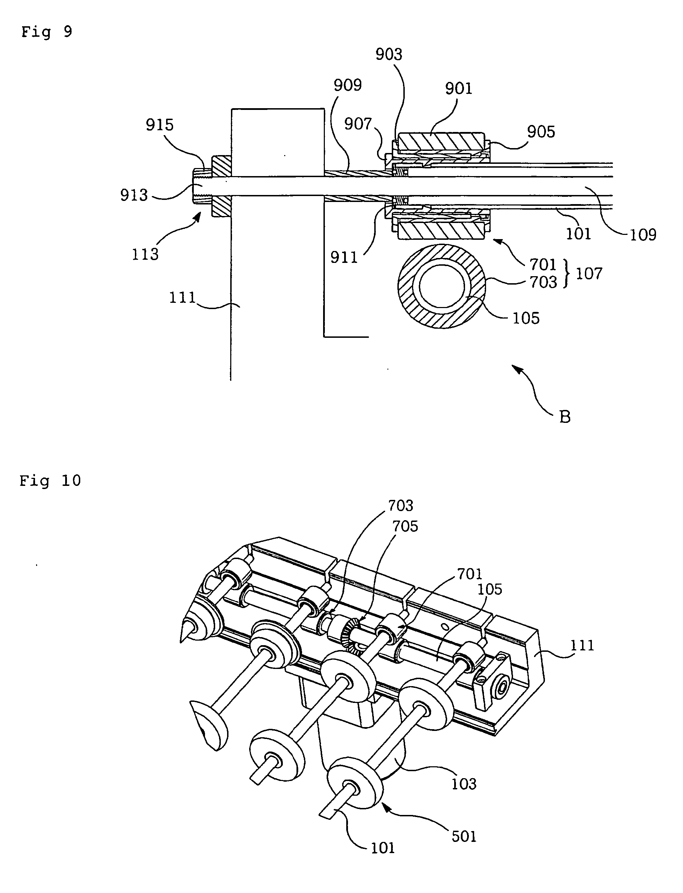

Fig. 9 is an enlarged view of portion B of Fig. 6, and Fig. 10 is a perspective view of portion B of Fig. 6. In Figs. 9 and 10, a power transmission unit 107 and the tension unit 113 of the conveying apparatus 500 are illustrated.

A rotation shaft 105 is disposed perpendicular to the main shaft 101. The rotation shaft 105 transmits power from the motor 103 to the power transmission unit 107. Here, a gear train can be used for the power transmission between the motor 103 and the rotation shaft 105. In Fig. 10, bevel gears 705 are used to transmit power from the motor 103 to the rotation shaft 105.

Referring to Figs. 9 and 10, the power transmission unit 107 includes a first magnet unit 701 and a second magnet unit 703. The first magnet unit 701 is coupled to an end of the main shaft 101 by insertion. The second magnet unit 703 is disposed at a predetermined position of the rotation shaft 105 to face the first magnet unit 701.

In the first magnet unit 701, a magnet 901 is fixed using bushings 903 and 905 and is hooked on the main shaft 101 using a collet 907. A tubular spacer 909 is fitted between the first magnet unit 701 and the frame 111. The first magnet unit 701 is supported by a bearing member such as a ball bearing 911 disposed between the main shaft 101 and the auxiliary shaft 109.

The first and second magnet units 701 and 703 can be considered non-contact gears. When the second magnet unit 703 rotates, the first magnet unit 701 also rotates due to a repulsive force between the first and second magnetic units 701 and 703. Therefore, when the second magnet unit 703 rotates with the rotation shaft 105, the main shaft 101 also rotates owing to the first magnet unit 701 fixed to the main shaft 101.

Since the first and second magnetic units 701 and 703 do not make contact with each other (i.e., the first and second magnetic units 701 and 703 are spaced a predetermined distance), noises, irregular motions, and generation of undesired particles can be prevented.

The tension unit 113 includes a bolt unit 913 and a nut unit 915. The bolt unit 913 is disposed at an end of the auxiliary shaft 109, and the nut unit 915 is coupled to the bolt unit 913. The auxiliary shaft 109 can be fixed to the frame 111 by fastening the nut unit 915, and the tension of the auxiliary shaft 109 can be adjusted by fastening or releasing the nut unit 915. Alternatively, a turn buckle can be used as the tension unit 113.

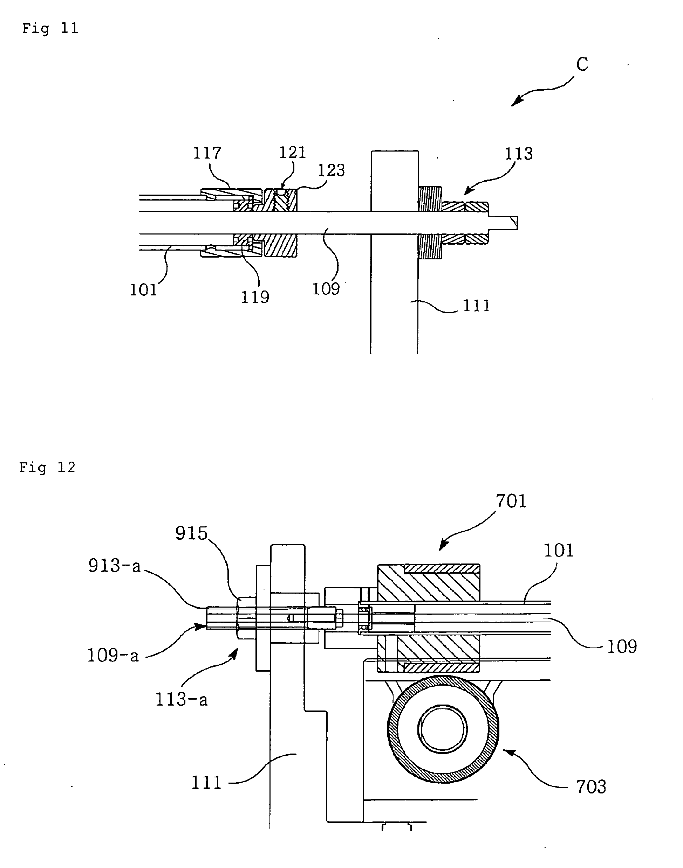

Fig. 11 is an enlarged view of portion C of Fig. 6.

An end of the main shaft 101 opposite to the power transmission unit 107 is fixed together with a ball bearing 119 using an end cap 117, and a ring stopper 123 is fixed to the auxiliary shaft 109 using a set screw 121. Therefore, the main shaft 101 can be firmly fixed without an axial motion.

The tension unit 113 can be disposed on an end of the auxiliary shaft 109 opposite to the power transmission unit 107.

Fig. 12 is view illustrating an auxiliary shaft 109 and a tension unit 113 according to another embodiment of the present invention.

For example, if it is difficult to form a bolt unit at the auxiliary shaft 109 since the auxiliary shaft 109 has a small diameter, a reinforcement shaft 109-a having a diameter greater than that of the auxiliary shaft 109 can be used. In this case, a nut formed at one end of the reinforcement shaft 109-a can be coupled to a bolt formed at an end of the auxiliary shaft 109 for axial connection between the reinforcement shaft 109-a and the auxiliary shaft 109. A bolt unit 913-a of the tension unit 113 can be formed at the reinforcement shaft 109-a.

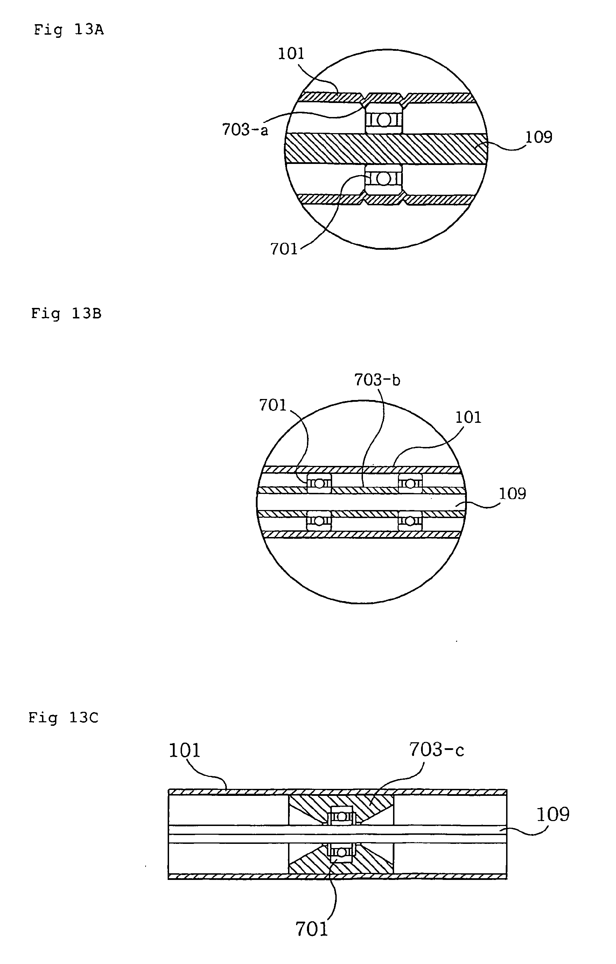

Figs. 13A to 13C are cross-sectional views illustrating bearing members for supporting a main shaft according to another embodiment of the present invention.

In the bearing member of Fig. 13A, a caulking portion 703-a is formed at a main shaft 101 for fixing a ball bearing 712. In the bearing member of Fig. 13B, a collar 703-b is disposed between ball bearings 712 for firmly fixing the ball bearings 712.

In the bearing member of Fig. 13C, a bearing holder 703-c is used to fix a ball bearing to the inside of a main shaft 101. The embodiments of Figs 13A to 13C may be useful when the diameter of the main shaft 101 is much greater than that of the auxiliary shaft 109.

As described above, according to the present invention, the conveying apparatus includes the auxiliary shaft as well as the main shaft. Therefore, the main shaft can be prevented from deflection or bending caused by its own weight or an article placed thereon. Furthermore, the main shaft is supported at multi points so that a force applied to the main shaft from an upper side can be easily distributed and dampened. In this case, the main shaft can be formed of a light material, and the bearing member supporting the main shaft can have a small size. Accordingly, the conveying apparatus can have a simple structure.

In addition, the auxiliary shaft used to support the main shaft can be precisely adjusted in tension by using the tension unit. Therefore, a supporting force applied to an article from the auxiliary shaft (or the main shaft) can be precisely adjusted by adjusting the tension of the auxiliary shaft using the tension unit.

It will be apparent to those skilled in the art that various modifications and variations can be made in the present invention. Thus, it is intended that the present invention covers the modifications and variations of this invention provided they come within the scope of the appended claims and their equivalents.

## Claims

1. An apparatus for conveying a flat panel, comprising:
a plurality of parallel main shafts (101, 201, 301, 401); and
a plurality of auxiliary shafts (109, 203, 303, 403) inserted through the main shafts (101, 201, 301, 401), respectively, the auxiliary shafts (109, 203, 303, 403) having both ends fixed to a frame (111);
**characterized** through
a plurality of bearing members (115) disposed between the main shafts (101, 201, 301, 401) and the auxiliary shafts (109, 203, 303, 403) for supporting the main shafts (101, 201, 301, 401) at multi points and allowing rotation of the main shafts (101, 201, 301, 401); and
a tension unit (113) for adjusting tension of the auxiliary shafts (109, 203, 303, 403) thereby controlling the deflection of the main shafts (101, 201, 301, 401), the tension unit (113) being attached to right ends and/or left ends of the auxiliary shafts (109, 203, 303, 403), wherein the tension of the auxiliary shafts (109, 203, 303, 403) can be maintained at a desired level owing to the tension unit (113).

2. The apparatus according to claim 1, wherein each of the bearing members (115) comprises a ball bearing (911, 119, 712) coupled to the auxiliary shaft (109) by insertion.

3. The apparatus according to claim 2, wherein each of the bearing members (115) further comprises a bearing fixing member (703-a, 703-b, 703-c) for preventing movement of the ball bearing (712).

4. An apparatus according to claim 1, wherein the bearing members comprise a main magnet unit formed on an inner surface of the main shafts (201); and an auxiliary magnet unit formed on an outer surface of the auxiliary shafts (203) for supporting the main shafts (201) at multi points and allowing rotation of the main shafts (201) by applying a repulsive force to the main magnet unit.

5. An apparatus according to claim 1, wherein the bearing members comprise a closed cylinder in the auxiliary shafts (303) having a cavity portion (305); an air injection inlet (309) formed at an end of the cylinder for injecting air into the cavity portion (305); and a plurality of discharge holes (307) through which air is discharged from the cavity portion (305) for supporting the main shafts (301).

6. An apparatus according to claim 1, wherein the bearing members comprise the main shafts (401) being formed of a porous material, and outer surfaces of the auxiliary shafts (403) making contact with inner surfaces of the main shafts (401) when the auxiliary shafts (403) support the main shafts (401).

7. The apparatus according to any one of the claims 1-6, wherein the tension unit (113) comprises:
a bolt unit (913) formed at an end of the auxiliary shaft (109); and
a nut unit (915) coupled to the bolt unit (913) for pulling the auxiliary shaft (109),
wherein the tension of the auxiliary shaft (109) is adjustable using the nut unit (915).

8. The apparatus according to any one of the claims 1-7, further comprising a frame support member (503) disposed in parallel to the main shafts (101) to support the frame (111) so as to prevent bending of the frame (111) when the auxiliary shaft (109) is pulled by the tension unit (113).

9. The apparatus according to any one of the claims 1-8, further comprising a reinforcement shaft (109-a) having a diameter greater than that of the auxiliary shaft (109) and axially connected to the auxiliary shaft (109), wherein the tension unit (113) is disposed at an end of the reinforcement shaft (109-a).

10. The apparatus according to any one of the claims 1-9, further comprising a plurality of rollers coupled to the main shaft (101) by insertion.

11. The apparatus according to any one of the claim 1-10, further comprising:
a motor (103);
a rotation shaft (105) disposed perpendicular to the main shafts (101) and rotatable by receiving rotation power from the motor (103); and
a power transmission unit (107) for transmitting rotation power from the rotation shaft (105) to the main shafts (101).

12. The apparatus according to claim 11, wherein the power transmission unit (107) comprises:
a first magnet unit (701) disposed at ends of the main shaft (101); and
a second magnet unit (703) mounted on the rotation shaft (105) by insertion to apply a repulsive force to the first magnet unit (701) when rotating with the rotation shaft (105) so as to transmit rotation power from the rotation shaft (105 to the first magnet unit (701).

## Patentansprüche

1. Vorrichtung zum Transportieren eines flachen Panels, umfassend:
eine Mehrzahl von parallelen Hauptwellen (101, 201, 301, 401);und
einer Mehrzahl von Hilfswellen (109, 203, 303, 403),
die durch die Hauptwellen (101, 201, 301, 401) hindurch eingesetzt sind, bzw.
beide Enden der Hilfswellen (109, 203, 303, 403) sind an einem Rahmen (111) befestigt;
**gekennzeichnet durch**
eine Mehrzahl von Lagerelementen (115), welche an einer Mehrzahl von Stellen zwischen den Hauptwellen (101, 201, 301, 401) und den Hilfswellen (109, 203, 303, 403) zum Stützen der Hauptwellen (101, 201, 301, 401) angeordnet sind und welche eine Rotation der Hauptwellen (101, 201, 301, 401) ermöglichen; und
eine Spanneinheit (113) zum Anpassen einer Spannung der Hilfswellen (109, 203, 303, 403) zur Steuerung der Durchbiegung der Hauptwellen (101, 201, 301, 401), wobei die Spanneinheit (113) an rechten Enden und/oder linken Enden der Hilfswellen (109, 203, 303, 403) angeordnet ist, wobei die Spannung der Hilfswellen (109, 203, 303, 403) **durch** die Spanneinheit (113) auf einem gewünschten Grad gehalten werden kann.

2. Vorrichtung nach Anspruch 1, wobei jedes der Lagerelemente (115) ein Kugellager (911, 119, 712) umfasst, das mit der Hilfswelle (109) durch Einschieben verbunden ist.

3. Vorrichtung nach Anspruch 2, wobei jedes der Lagerelemente (115) desweiteren ein Lagerbefestigungselement (703-a, 703-b, 703-c) umfasst, um eine Bewegung des Kugellagers (712) zu verhindern.

4. Vorrichtung nach Anspruch 1, wobei das Lagerelement eine Hauptmagneteinheit umfasst, die an einer inneren Oberfläche der Hauptwellen (201) geformt ist; und eine Hilfsmagneteinheit, die an einer äusseren Oberfläche der Hilfswellen (203) zum Abstützen der Hauptwellen (201) an einer Mehrzahl von Stellen ausgebildet ist und eine Rotation der Hauptwellen (201) durch Anlegen einer Abstossungskraft an die Hauptmagneteinheit ermöglicht.

5. Vorrichtung nach Anspruch 1, wobei die Lagerelemente einen geschlossenen Zylinder, in den Hilfswellen (303) umfassen, welcher einen Hohlraumbereich (305) aufweist; eine Lufteinblasöffnung (309), welche an einem Ende des Zylinders zum Einblasen von Luft in den Hohlraumbereich (305) geformt ist; und eine Mehrzahl von Auslassöffnungen (307), durch welche Luft aus dem Hohlraumbereich (305) zum Stützen der Hauptwellen (301).

6. Vorrichtung nach Anspruch 1, wobei die Lagerelemente, die Hauptwellen (401) umfassen, welche aus einem porösen Material gebildet sind, und äussere Oberflächen der Hilfswellen (403), welche mit inneren Oberflächen der Hauptwellen (401) Kontakt in Kontakt stehen, wenn die Hilfswellen (403) die Hauptwellen (401) stützen.

7. Vorrichtung nach einem der Ansprüche 1 bis 6, wobei die Spanneinheit (113) umfasst:
eine Bolzeneinheit (913), welche an einem Ende der Hilfswelle (109) geformt ist; und
eine Muttereinheit (915), welche mit der Bolzeneinheit gekoppelt ist, zum Ziehen die Hilfswelle (109),
wobei die Spannung der Hilfswelle (109) über die Muttereinheit (915) einstellbar ist.

8. Vorrichtung nach einem der Ansprüche 1 bis 7, welche weiterhin ein Rahmentragelement (503) aufweist, welches parallel zu den Hauptwellen (101) angeordnet ist, um den Rahmen (111) zu stützen, um ein Biegen des Rahmens (111) zu verhindern, wenn die Hilfswelle (109) durch die Spanneinheit (113) gezogen wird.

9. Vorrichtung nach einem der Ansprüche 1 bis 8, welche weiterhin eine Verstärkungswelle (109-a) umfasst, welche einen grösseren Durchmesser als die Hilfswelle (109) aufweist und axial mit der Hilfswelle (109) verbunden ist, wobei die Spanneinheit (113) an einem Ende der Verstärkungswelle (109-a) angeordnet ist.

10. Vorrichtung nach einem der Ansprüche 1 bis 9, welche weiterhin eine Mehrzahl von Rollen umfasst, welche mit der Hauptwelle (101) durch Einschieben verbunden sind.

11. Vorrichtung nach einem der Ansprüche 1 bis 10, welche weiterhin umfasst:
einen Motor (103);
eine Rotationswelle (105), welche senkrecht zu den Hauptwellen (101) angeordnet ist und durch Erhalt von Rotationsenergie von dem Motor (103) drehbar ist; und
eine Kraftübertragungseinheit (107) zum Übertragen von Rotationsenergie von der Rotationswelle (105) auf die Hauptwellen (101).

12. Vorrichtung nach Anspruch 11, wobei die Energieübertragungseinheit (107) umfasst:
eine erste Magneteinheit (701), welche an Enden der Hauptwelle (101) angeordnet ist; und
eine zweite Magneteinheit (703), welche an der Rotationswelle (105) durch Einschieben angeordnet ist, um eine Abstossungskraft an die erste Magneteinheit (701) anzulegen, wenn sie mit der Rotationswelle (105) dreht, um Rotationsenergie von der Rotationswelle (105) auf die Magneteinheit (701) zu übertragen.

## Revendications

1. Appareil de transport d'un panneau plat, comprenant:
une pluralité d'arbres principaux parallèles (101, 201, 301, 401); et
une pluralité d'arbres auxiliaires (109, 203, 303, 403) introduits à travers les arbres principaux (respectivement 101, 201, 301, 401), les arbres auxiliaires (109, 203, 303, 403) présentant les deux extrémités fixées à un bâti (111);
**caractérisé par**
une pluralité d'éléments porteurs (115) disposés entre les arbres principaux (101, 201, 301, 401) et les arbres auxiliaires (109, 203, 303, 403), pour supporter les arbres principaux (101, 201, 301, 401) en plusieurs points et permettre la rotation des arbres principaux (101, 201, 301,401); et
une unité de tension (113) destinée à ajuster la tension des arbres auxiliaires (109, 203, 303, 403), contrôlant ainsi la déflexion des arbres principaux (101, 201, 301, 401), l'unité de tension (113) étant fixée aux extrémités droites et/ou aux extrémités gauches des arbres auxiliaires (109, 203, 303, 403), où la tension des arbres auxiliaires (109, 203, 303, 403) peut être maintenue à un niveau désiré grâce à l'unité de tension (113).

2. Appareil selon la revendication 1, dans lequel chacun des éléments porteurs (115) comprend un roulement à bille (911, 119, 712) couplé à l'arbre auxiliaire (109) par insertion.

3. Appareil selon la revendication 2, dans lequel chacun des éléments porteurs (115) comprend par ailleurs un élément de fixation de roulement (703-a, 703-b, 703-c) destiné à éviter un mouvement du roulement à bille (712).

4. Appareil selon la revendication 1, dans lequel les éléments porteurs comprennent une unité d'aimant principale formée sur une surface intérieure des arbres principaux (201) ; et une unité d'aimant auxiliaire formée sur une surface extérieure des arbres auxiliaires (203) pour supporter les arbres principaux (201) en plusieurs points et permettre la rotation des arbres principaux (201) en appliquant une force de répulsion sur l'unité d'aimant principale.

5. Appareil selon la revendication 1, dans lequel les éléments porteurs comprennent un cylindre fermé dans les arbres auxiliaires (303) présentant une partie de cavité (305); une entrée d'injection d'air (309) formée à une extrémité du cylindre pour injecter de l'air dans la partie de cavité (305); et une pluralité de trous de décharge (307) par lesquels de l'air est évacuée de la partie de cavité (305) pour supporter les arbres principaux (301).

6. Appareil selon la revendication 1, dans lequel les éléments porteurs comprennent les arbres principaux (401) formés en un matériau poreux, et les surfaces extérieures des arbres auxiliaires (403) faisant contact avec les surfaces intérieures des arbres principaux (401) lorsque les arbres auxiliaires (403) supportent les arbres principaux (401) .

7. Appareil selon l'une quelconque des revendications 1 à 6, dans lequel l'unité de tension (113) comprend:
une unité de boulon (913) formée à une extrémité de l'arbre auxiliaire (109); et
une unité d'écrou (915) couplée à l'unité de boulon (913) pour tirer de l'arbre auxiliaire (109),
dans lequel la tension de l'arbre auxiliaire (109) est ajustable à l'aide de l'unité d'écrou (915).

8. Appareil selon l'une quelconque des revendications 1 à 7, comprenant par ailleurs un élément de support de cadre (503) disposé en parallèle avec les arbres principaux (101), pour supporter le cadre (111) de manière à éviter une flexion du cadre (111) lorsque l'arbre auxiliaire (109) est tiré par l'unité de tension (113).

9. Appareil selon l'une quelconque des revendications 1 à 8, comprenant par ailleurs un arbre de renforcement (109-a) présentant un diamètre supérieur à celui de l'arbre auxiliaire (109) et connecté axialement à l'arbre auxiliaire (109), où l'unité de tension (113) est disposée à une extrémité de l'arbre de renforcement (109-a).

10. Appareil selon l'une quelconque des revendications 1 à 9, comprenant par ailleurs une pluralité de rouleaux couplés à l'arbre principal (101) par insertion.

11. Appareil selon l'une quelconque des revendications 1 à 10, comprenant par ailleurs:
un moteur (103) ;
un arbre de rotation (105) disposé perpendiculaire aux arbres principaux (101) et rotatif en recevant une énergie de rotation power du moteur (103); et
une unité de transmission d'énergie (107) destinée à transmettre l'énergie de rotation de l'arbre de rotation (105) aux arbres principaux (101).

12. Appareil selon la revendication 11, dans lequel l'unité de transmission d'énergie (107) comprend:
une première unité d'aimant (701) disposée aux extrémités de l'arbre principal (101); et
une deuxième unité d'aimant (703) montée sur l'arbre de rotation (105) par insertion, pour appliquer une force de répulsion sur la première unité d'aimant (701) lors de la rotation avec l'arbre de rotation (105), de manière à transmettre la puissance de rotation de l'arbre de rotation (105) à la première unité d'aimant (701).
